# EUROPEAN PATENT SPECIFICATION

(11) **EP 1 529 764 B1**
(45) Date of publication and mention of the grant of the patent: **02.11.2006**
(21) Application number: 04256932.7
(22) Date of filing: 09.11.2004
(51) Int. Cl.: C04B 35/622, C04B 35/111

(54) **Method of producing a ceramic component**
Verfahren zur Herstellung eines keramischen Bestandteils
Procédé pour la fabrication d'une composante céramique

(30) Priority: 10.11.2003 GB 0326183
(43) Date of publication of application: 11.05.2005
(73) Proprietor: Howmedica Osteonics Corp., Allendale, NJ 07401-1677 (US); The Ecole Nationale Superieure de Ceramique Industrielle, 87065 Limoges Cedex (FR); Centre National de la Recherche Scientifique, 75794 Paris Cedex 16 (FR)
(72) Inventor: Penard, Anne-Laure Université de Limoges ENSCI, 87065 Limoges Cedex (FR); Rossignol, Fabrice Université de Limoges ENSCI, 87065 Limoges Cedex (FR); Chartier, Thierry Université de Limoges ENSCI, 87065 Limoges Cedex (FR); Pagnoux, Cecile Université de Limoges ENSCI, 87065 Limoges Cedex (FR); Murphy, Matthew Stryker Howmedica Osteonics, Limerick (IE); Cueille, Christophe Benoist Girard SAS, 14201 Hérouveille-Saint-Clair Cédex (FR); Insley, Gerard Stryker Howmedica Osteonics, Limerick (IE)
(74) Representative: Bridge-Butler, Alan James

(56) References cited:
- EP-A- 0 908 427
- US-A- 5 639 909
- US-A- 5 948 335
- J. AM. CERAM. SOC., vol. 83, no. 11, 2000, pages 2661-2667, XP001205297
- PRAGER & JACOBSON: "Beilsteins Handbuch der organischen Chemie" 1920, SPRINGER VERLAG , BERLIN , XP002319392 4th Edition, Zweiter Band (Vol. 2), "Acyclische Monocarbonsäuren und Polycarbonsäuren" * page 167, line 44 - page 167, line 45 *

## Description

This invention relates to a method of producing a ceramic component using a direct coagulation casting process.

Direct coagulation casting (DCC) comprises coagulating a concentrated dispersed suspension into a solid state to get cohesive green parts exhibiting a low shrinkage during their drying. The liquid to solid transformation occurs during the consolidation and is controlled by the electrostatic forces that act on the particles. Repulsive forces, created during the dispersion stage, are progressively and uniformly annealed by attractive forces resulting from the modification of the chemistry near the surface of powders. One approach of DCC, initially proposed by Gauckler, (L.J. Gauckler, T. Graule, F. Baader, *Ceramic Forming using enzyme catalysed reactions,* Materials Chemistry and Physics, 61, 78-102 (1999) Gauckler's initial Patent on DCC: US 5948335, 1999-09-07, "*Method for the forming of ceramic green parts"* and B. Balzer, M.K.M. Hruschka, LJ. Gauckler, *Coagulations kinetics and mechanical behaviour of wet alumina bodies produced via DCC,* Journal of Colloid and Interface Science. 216, 379-386 (1999).) and later developed by SPCTS, (R. Laucournet, C. Pagnoux, T. Chartier and J.F. Baumard, *Coagulation method of aqueous concentrated alumina suspensions by thermal decomposition of hydroxyaluminium diacetate*, Journal of the American Ceramic Society, 83 [11], 2661-2667 (2000).), consists in destabilizing a highly concentrated suspension once this suspension has been casted into a non-porous mould, totally hermetic, in setting in motion a time-delayed chemical reaction. The coagulation may be catalysed by the temperature.

According to the DVLO theory, the stability of a dipsersed suspension depends on two main factors which are the pH and ionic strength. In the DCC process, (A. Dakskobler, T. Kosmac, *Weakly flocculated aqueous suspensions prepared by the addition of Mg(II) ion*, Journal of the American Ceramic Society, 83 [3], 666-668 (2000); A. Dakskobler, T. Kosmac, *Destabilization of an alkaline aqueous suspension by the addition of magnesium acetate*, Colloids and Surfaces A: Physicochemical and Engineering Aspects. 195, 197-203 (2001); J. Davies, J.G.P. Binner, *Coagulation of electrosterically dispersed concentrated alumina suspensions for paste production,* Journal of the European Ceramic Society. 20, 1555-1567 (2000): J. Davies, J.P.G. Binner, *Plastic forming of alumina from coagulated suspensions,* Journal of the European Ceramic Society. 20, 1569-1577 (2000); and G.V. Francks, N.V. Velamakanni, F.F. Lange, *Vibraforming and in situ flocculation of consolidated coagulated alumina slurries*, Journal of the American Ceramic Society. 78[5], 1324-1328 (1995).) a coagulant agent is added after the dispersion stage. This agent induces a chemical reaction, and the products of this reaction allow to increase the ionic strength and/or to shift the pH towards the isoelectric point (IEP), which, at the end, leads to the destabilization of the suspension. After consolidation, the shaped body is dried under controlled atmosphere (temperature as well as humidity) and then sintered.

The present invention is intended to provide a method of direct coagulation casting to produce ceramic components which are particularly, although not essentially, for the biomedical industry.

According to the present invention a method of producing a ceramic component includes dispersing an alpha-alumina nanopowder whose diameter is above 100 nm in water, using 2-phosphonobutane-1,2,4-tricarboxylic acid (PBTC) or 4,5-Dihydroxy-m-benzenedisulfonic Acid, Disodium Salt (Tiron^{™}) as dispersant, shifting the pH towards the isoelectric point (IEP) by adding a mixture of acetic anhydride and ethylene glycol, or polyethylene glycol, drying in a controlled atmosphere (humidity, temperature) and post compacting using cold isostatic pressing and sintering the three-dimensional structure thus formed.

The alpha-alumina particle diameter can be between 100 nm and 5 µm.

By using PBTC as an electrostatic dispersant for alumina nanopowders the repulsive negative charges at the alumina surface are the result of the ionised carboxylic and phosphonate groups of the grafted PBTC molecules. The time-delayed coagulation is achieved by shifting the pH towards the IEP when adding the acetic anhydride that transforms into acetic acid at the contact with water. The acetic anhydride is introduced with ethylene glycol as co-solvent to increase its miscibility in water and thus get an homogeneous coagulation, ethylene glycol also generates a lubricant effect which is beneficial to the cold isostatic pressing.

The nanopowder is preferably an oxide powder with a metal cation, able to exhibit a strong adsorption of PBTC molecules (e.g. alumina nanopowders). The solvent can be water base, for example demineralised, high purity and/or sterile water.

The elaboration of the concentrated suspension (i.e. solid loading over 55 vol.%) is achieved by first dissolving the PBTC (i.e. about 1 ppm of PBTC mol per m² of oxide powder surface) into the solvent and after the powder is added. It is possible to add the powder in several stages, with an ultrasonic (US) treatment between each addition stage.

In order to achieve dispersion, a deagglomeration and/or milling treatments (for example ball milling, attrition milling) are used and it is also possible to add a binder after dispersion. A de-aeration stage under vacuum (<50 mbar) is carried out to remove air bubbles that exist in the suspension after US treatments.

A thermal stabilization of the well-dispersed suspension at a temperature around 5°C is then carried out to delay the coagulation when adding the coagulant, thus providing time for casting.

Acetic anhydride is used as the coagulant agent. Since it is very sensitive to water, it has to be mixed with a co-solvent that helps to increase the miscibility of acetic anhydride in water and slow down the hydrolysis kinetics of acetic anhydride.

The temperature has to be set to a desired one for the same reason as set forth in the thermal stabilization stage.

The blend of coagulant and its co-solvent is added to the suspension while mixing. This mixing should be adapted to avoid the creation of air bubbles, for example, it can be ensured mechanically by a rotating blade whose design depends on the viscosity of the suspension. It is also very important to reach an homogeneous distribution of the coagulant within the entire volume of the suspension to further obtain a uniform coagulation.

Preferably casting takes place once the coagulant is mixed to the suspension and before coagulation, the suspension being cast in a non-porous mould in which coagulation occurs.

Once the body is coagulated, it is necessary to dry and de-mould it. It is preferable to first start drying the body in the mould in order to strengthen it and then to de-mould it after. If the drying is done directly in the mould, the mould can be designed to prevent any stresses or cracks. If de-moulding is done first, the coagulated body has to be strengthened to avoid any deformations.

Once again the drying has to be carried out under controlled atmospheres (temperature and humidity) to avoid cracking of the body.

The dried compacts are further post-compacted by cold isostatic pressing at a pressure of 2,000 bars.

Tiron (4,5-Dihydroxy-m-benzenedisulfonic Acid, Disodium Salt) can be used in place of PBTC to achieve similar results.

The final sintering stage will give the final properties to the body. The sintering process can be as simple as natural sintering.

The invention can be carried out in various ways but one method of producing a ceramic component as set forth and using a PBTC will now be described by way of example and with reference to accompanying drawing which is a flow diagram of the process.

The alpha-alumina nanopowder used exhibits a surface area of 7m²/g, a theoretical density of 3.98 g.cm⁻³, and a particle diameter range from 100 nm to 5 µm.

The first step comprises preparing a concentrated suspension, for example 100 ml of suspension with a solid loading of 58 vol.%. Such a solid loading is practically the maximum which can be used with the alumina powder whose characteristics are described here above (over 58 vol.%, the viscosity would be too high to get a good de-aeration of concentrated suspension). The weight of the alumina powder necessary to be added is then equal to 230.84 g, which also corresponds to a surface of 1615.9 m². The optimum quantity of dispersant (i.e. the one conducting to the minimum viscosity) has been determined to be equivalent to 10⁻⁶ mol of 2-phosphonobutane-1,2,4-tricarboxylic acid (PBTC) per square meter of alumina powder surface. Actually, PBTC is introduced as a tetra-sodium salt (PBTC-Na₄) whose molar mass is equal to 358 g. A quantity of 0.578 g of PBTC-NA₄ is then dissolved in 42 ml of demineralised water prior to the addition of the alumina powder.

58 vol.% of solid is a very high solid loading. It is then necessary to add the powder in two stages. 40 vol.% are initially added and the second step described here below is applied. The remaining 18 vol.% of alumina powder is then introduced and again the second step is applied.

The total weight of solid dispersants and coagulants is less than 2% of the total weight of solids.

The second step comprises using an ultrasonic treatment for the deagglomeration of the alumina powder. The ultrasonic energy has to be high enough (700 Watts) to break strong agglomerates. To prevent from the heating of the suspension upon the energy brought by the ultrasounds, 1 second pulses are applied every three seconds over a duration of 2 minutes. A cooling system may also contribute to reduce the heating.

The third step comprises the de-aeration of the concentrated suspension which can be done in a chamber under a vacuum below 50 mbars.

The fourth step comprises preparing a mixture of acetic anhydride (coagulant) and ethylene glycol (co-solvent) or, alternatively, polyethylene glycol can be used in the following proportions in volume: 1/8 of acetic anhydride and 7/8 of ethylene glycol or polyethylene glycol.

The fifth step consists cooling down to 5°C the temperature of the concentrated suspension and the mixture of coagulant and co-solvent.

The sixth step comprises mixing the 100 ml of concentrated suspension with 8 ml of the mixture of coagulant and co-solvent under mechanical agitation with a blade rotating at few rpm to prevent from cavitation (creation of air bubbles).

The seventh step comprises casting into a non-porous mould based, for instance, on silicon, latex or Teflon. Once cast the coagulation proceeds at room temperature in less than five minutes. Non-porous rigid and/or flexible moulds are used (lubricants such as Vaseline, Teflon or high purity olive oil can be used to aid removal of part from the mould).

The eighth step comprises drying the three dimensional wet body directly inside the mould. The drying temperature and the humidity are adjusted depending on the shape and size of the part. Typically, an increase of the temperature and hygrometry inhibits the creation of cracks, but both have to be adapted depending on the size and shape of the part of to be dried.

The ninth step comprises de-moulding the dried green part.

The tenth step comprises of cold isostatic pressing (CIP) the dried green part at 2,000 bars pressure using, for instance, latex or silicone-based resins as the surrounding capsule.

Green densities obtained are above 60% of theoretical density. A cold isostatic pressing (CIP) stage can be used thanks to the mobility of the grains because of the specific system used, for example good flow of grains enable formation of a more dense compact.

A bottom-up approach is used with pure alpha-alumina to control the type and content of further added additives, such as magnesium oxide, gamma-alumina, silicon, zirconia, etc.

The eleventh step comprises sintering the part to a density close to the theoretical one by applying a natural sintering at 1600 °C for two hours.

The main benefits of this process are the ability to produce ceramic components requiring minimal machining once sintered as well as the production of ceramic shapes previously unobtainable with current manufacturing processes. Compared to a classical DCC process using enzymes (Gauckler), it is very fast since a homogeneously coagulated body can be obtained within 5 minutes.

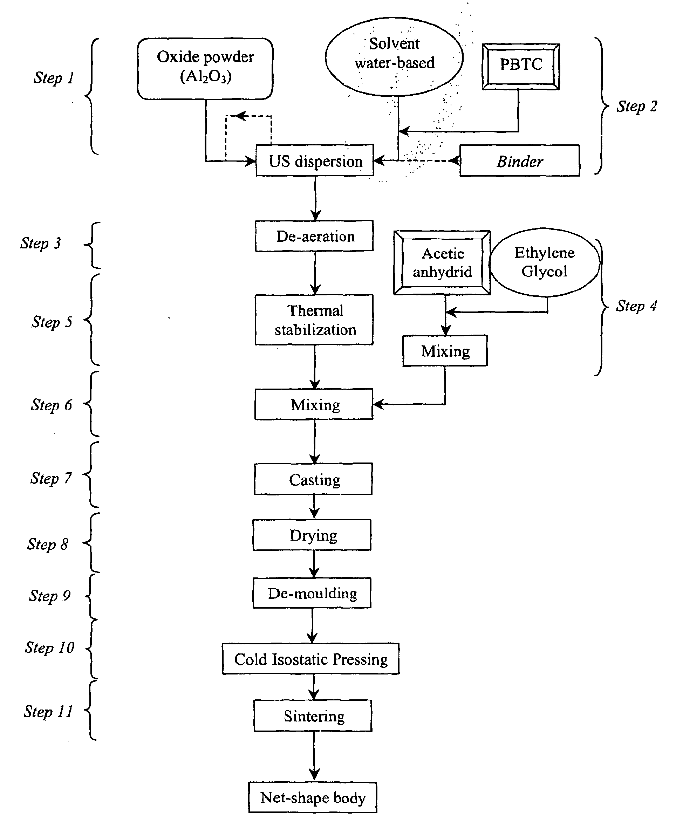

## Claims

1. A method of producing a ceramic component includes dispersing an alpha-alumina nanopowder whose diameter is above 100 nm in water, using 2-phosphonobutane-1,2,4-tricarboxylic acid (PBTC) or 4,5-Dihydroxy-m-benzenedisulfonic Acid, Disodium Salt (Tiron^{™}) as dispersant, shifting the pH towards the isoelectric point (IEP) by adding a mixture of acetic anhydride and ethylene glycol, or polyethylene glycol, drying in a controlled atmosphere (humidity, temperature) and post compacting using cold isostatic pressing and sintering the three-dimensional structure thus formed.

2. A method as claimed in claim 1 in which the nanopowder is an oxide powder with a metal cation, able to exhibit a strong adsorption of PBTC molecules, for example demineralised, high purity and/or sterile water.

3. A method as claimed in claim 1 or claim 2 in which the PBTC is first mixed to water and after the powder is added.

4. A method as claimed in claims 1 to 3 in which the powder is added in several stages with an ultrasonic (US) treatment between each addition stage.

5. A method as claimed in claim 4 or claim 5 in which a binder is added after dispersion.

6. A method as claimed in claim 4 or claim 5 in which a de-aeration stage under vacuum is carried out to remove air bubbles after US treatments.

7. A method as claimed in any one of the preceding claims in which a thermal stabilization stage is applied to obtain a desired dispersion temperature.

8. A method as claimed in any one of the preceding claims in which the acetic anhydride acts as a coagulant agent and is mixed with co-solvent to increase the miscibility of the acetic anhydride in water, and to slow down the hydrolysis kinetics of acetic anhydride.

9. A method as claimed in any one of the preceding claims 7 or 8 in which the blend of the coagulant with its co-solvent is added to the suspension while mixing and avoiding the creation of air bubbles.

10. A method as claimed in claim 9 which includes mixing mechanically by a rotating blade.

11. A method as claimed in claims 9 and 10 in which, once the coagulant is mixed to the suspension and before coagulation, the suspension is cast in a non-porous mould in which coagulation occurs.

12. A method as claimed in claim 11 in which the body is coagulated and is dried and de-moulded before sintering.

13. A method as claimed in claim 11 or claim 12 in which the dried compacts are further post-compacted by cold isostatic pressing.

## Patentansprüche

1. Verfahren zur Herstellung einer keramischen Komponente, das Dispergieren eines α-Aluminiumoxid-Nanopulvers einschließt, dessen Durchmesser in Wasser oberhalb 100 nm ist, unter Verwendung von 2-Phosphonobutan-1,2,4-tricarbonsäure (PBTC) oder 4,5-Dihydroxy-m-benzoldisulfonsäure, Dinatriumsalz (Tiron^{™}) als Dispersionsmittel, Verschieben des pH-Werts zum isoelektrischen Punkt (IEP) durch Zusetzen eines Gemisches von Essigsäureanhydrid und Ethylenglycol oder Polyethylenglycol, Trocknen in einer gesteuerten Atmosphäre (Luftfeuchtigkeit, Temperatur) und Nachverdichten unter Verwendung von kaltem isostatischem Pressen und Sintern der so gebildeten dreidimensionalen Struktur.

2. Verfahren nach Anspruch 1, in dem das Nanopulver ein Oxidpulver mit einem Metallkation ist, das eine starke Adsorption von PBTC-Molekülen zeigen kann, beispielsweise entmineralisiertes, Hochreinheits- und/oder steriles Wasser.

3. Verfahren nach Anspruch 1 oder Anspruch 2, in dem das PBTC zuerst zu Wasser gemischt wird und danach das Pulver zugesetzt wird.

4. Verfahren nach Ansprüchen 1 bis 3, in dem das Pulver in verschiedenen Stufen mit einer Ultraschall (US)-Behandlung zwischen jeder Zugabestufe zugegeben wird.

5. Verfahren nach Anspruch 4 oder Anspruch 5, in dem nach Dispersion ein Bindemittel zugegeben wird.

6. Verfahren nach Anspruch 4 oder Anspruch 5, in dem eine Entlüftungsstufe unter Vakuum ausgeführt wird, um nach US-Behandlungen Luftblasen zu entfernen.

7. Verfahren nach einem der vorangehenden Ansprüche, in dem eine thermische Stabilisierungsstufe angewendet wird, um eine gewünschte Dispersionstemperatur zu erhalten.

8. Verfahren nach einem der vorangehenden Ansprüche, in dem das Acetanhydrid als ein Koagulierungsmittel wirkt und mit Co-Lösungsmittel vermischt wird, um die Mischbarkeit des Acetanhydrids in Wasser zu erhöhen und die Hydrolysekinetik von Acetanhydrid zu verlangsamen.

9. Verfahren nach einem der vorangehenden Ansprüche 7 oder 8, in dem das Gemisch von dem Koagulierungsmittel mit seinem Co-Lösungsmittel zu der Suspension während Vermischen zugegeben wird und die Erzeugung von Luftblasen vermieden wird.

10. Verfahren nach Anspruch 9, das mechanisches Vermischen mit einem rotierenden Blatt einschließt.

11. Verfahren nach Ansprüchen 9 und 10, in dem, sobald das Koagulierungsmittel mit der Suspension vermischt ist und vor einer Koagulation, die Suspension in eine nicht poröse Form gegossen wird, in welcher Koagulation stattfindet.

12. Verfahren nach Anspruch 11, in dem der Körper koaguliert wird und vor dem Sintern getrocknet und aus der Form entnommen wird.

13. Verfahren nach Anspruch 11 oder Anspruch 12, in dem die getrockneten kompakten Stoffe durch kaltes isostatisches Verpressen weiter nach-verdichtet werden.

## Revendications

1. Procédé pour la fabrication d'une composante céramique, qui comprend les étapes consistant à disperser une nanopoudre d'alpha-alumine dont le diamètre est au-dessus de 100 nm dans de l'eau, utiliser du sel de disodium d'acide 2-phosphonobutane-1,2,4-tricarboxylique (PBTC) ou d'acide 4,5-dihydroxy-m-benzènedisulfonique (Tiron?) en tant que dispersant, décaler le pH vers le point isoélectrique (PIE) en ajoutant un mélange d'anhydride acétique et d'éthylène glycol ou de poly(éthylène glycol), sécher dans une atmosphère régulée (humidité, température) et post-compacter en utilisant une compression isostatique à froid et un frittage de la structure tridimensionnelle ainsi formée.

2. Procédé selon la revendication 1, dans lequel la nanopoudre est une poudre d'oxyde avec un cation de métal, capable de présenter une forte adsorption des molécules de PBTC, par exemple de l'eau déminéralisée, de haute pureté et/ou stérile.

3. Procédé selon la revendication 1 ou 2, dans lequel le PBTC est tout d'abord mélangé à l'eau, après quoi la poudre est ajoutée.

4. Procédé selon l'une quelconque des revendications 1 à 3, dans lequel la poudre est ajoutée en plusieurs stades avec un traitement ultrasonore (US) entre chaque stade d'addition.

5. Procédé selon la revendication 4 ou la revendication 5, dans lequel un liant est ajouté après dispersion.

6. Procédé selon la revendication 4 ou la revendication 5, dans lequel un stade de désaération sous vide est réalisé pour éliminer les bulles d'air après les traitements US.

7. Procédé selon l'une quelconque des revendications précédentes, dans lequel un stade de stabilisation thermique est appliqué pour obtenir une température de dispersion souhaitée.

8. Procédé selon l'une quelconque des revendications précédentes, dans lequel l'anhydride acétique agit comme agent coagulant et est mélangé à un cosolvant pour augmenter la miscibilité de l'anhydride acétique dans l'eau, et pour ralentir la cinétique d'hydrolyse de l'anhydride acétique.

9. Procédé selon l'une quelconque des revendications 7 ou 8 précédentes, dans lequel le mélange du coagulant avec son cosolvant est ajouté à la suspension tout en mélangeant et en évitant la création de bulles d'air.

10. Procédé selon la revendication 9, qui comprend le mélange mécanique par une ailette rotative.

11. Procédé selon les revendications 9 et 10, dans lequel, une fois que le coagulant est mélangé à la suspension et avant coagulation, la suspension est coulée dans un moule non poreux dans lequel la coagulation se produit.

12. Procédé selon la revendication 11, dans lequel le corps est coagulé et est séché et démoulé avant frittage.

13. Procédé selon la revendication 11 ou la revendication 12, dans lequel les comprimés séchés sont en outre post-compactés par compression isostatique à froid.
